# EUROPÄISCHE PATENTSCHRIFT

(11) **EP 2 516 193 B1**
(45) Veröffentlichungstag und Bekanntmachung des Hinweises auf die Patenterteilung: **06.07.2016**
(21) Anmeldenummer: 10779464.6
(22) Anmeldetag: 02.11.2010
(51) Int. Cl.: B60K 6/48, B60K 6/445, F16H 3/72, B60K 6/387, F16H 37/08

(54) **GETRIEBEANORDNUNG UND KRAFTFAHRZEUG**
TRANSMISSION ARRANGEMENT AND MOTOR VEHICLE
DISPOSITIF DE BOÎTE DE VITESSES ET VÉHICULE À MOTEUR

(30) Priorität: 22.12.2009 DE 102009059935
(43) Veröffentlichungstag der Anmeldung: 31.10.2012
(73) Patentinhaber: Volkswagen Aktiengesellschaft, 38440 Wolfsburg (DE)
(72) Erfinder: HOFMANN, Lars, 38448 Wolfsburg (DE); SCHRÖDER, Hendrik, 38126 Braunschweig (DE)
(86) Internationale Anmeldenummer: PCT/EP2010/006683
(87) Internationale Veröffentlichungsnummer: WO 2011/076310

(56) Entgegenhaltungen:
- US-A- 2 588 750
- US-A1- 2007 105 678

## Beschreibung

### Gebiet der Erfindung

Die Erfindung betrifft eine Getriebeanordnung für ein Hybridfahrzeug, umfassend
- ein Differential, das drei Differentialwellen, nämlich eine Differential-Eingangswelle und eine erste und eine zweite Differential-Ausgangswelle aufweist, wobei die Differential-Eingangswelle mit einer mit einem Verbrennungsmotor koppelbaren Getriebeeingangswelle und die erste Differential-Ausgangswelle über einen Knoten mit einer mit dem Abtrieb des Hybridfahrzeugs koppelbaren Getriebe-Ausgangswelle gekoppelt ist und wobei zwei der Differentialwellen mittels einer ersten steuerbaren Kupplungsvorrichtung miteinander koppelbar sind,
- einen Variator, dessen Variator-Eingangswelle mit der zweiten Differential-Ausgangswelle gekoppelt ist und dessen Variator-Ausgangswelle über den Knoten mit der ersten Differential-Ausgangswelle sowie mit der Getriebe-Ausgangswelle gekoppelt ist.

Die Erfindung betrifft weiter ein Kraftfahrzeug, umfassend eine Verbrennungskraftmaschine, eine Getriebeanordnung der oben genannten Art sowie einen Abtrieb, wobei die Verbrennungskraftmaschine mit der Getriebeeingangswelle und der Abtrieb mit der Getriebeausgangswelle gekoppelt sind.

### Stand der Technik

Derartige Getriebestrukturen, die z.B. aus der DE 100 04 812 A1 bekannt sind, werden auch als einfach leistungsverzweigte Getriebe mit eingangsseitigem Differential - kurz ELVeD - und zusätzlichem, rein mechanischem Gang bezeichnet.

Fahrzeuggetriebe im Allgemeinen ermöglichen die Anpassung eines vom Verbrennungsmotor erzeugten Lieferkennfeldes an ein an der angetriebenen Achse bzw. den angetriebenen Achsen benötigtes Bedarfskennfeld durch Wandlung von Drehzahl und Drehmoment. Eine stufenlose Wandlung ist beispielsweise durch ein elektrisches Getriebe möglich, wobei ein am Verbrennungsmotor angeordneter Generator zur Stromerzeugung genutzt wird, welche eine oder mehrere am Abtrieb angeordnete elektrischen Maschinen antreibt, die im motorischen Betrieb das benötigte Drehmoment bei geeigneter Drehzahl erzeugen. In speziellen Fahrsituationen kann jedoch auch die vorwiegend generatorisch arbeitende Maschine motorisch arbeiten bzw. die vorwiegend motorisch arbeitende Maschine oder Maschinen generatorisch arbeiten. Solche elektrischen Getriebebaueinheiten aus zwei über eine geeignete Leistungselektronik miteinander verbundenen elektrischen Maschinen sind als elektrische Variatoren bekannt. Durch Hinzufügung einer elektrischen Energiespeicherung hoher Speicherkapazität lässt sich ein hybrider Antriebsstrang mit bekannten Zusatzfunktionen eines Hybridfahrzeugs realisieren.

Anstelle elektrischer Maschinen können auch hydraulische Maschinen, z.B. Axialkolben-, Radialkolben-, Zahnrad- und/oder Flügelzellenmaschinen eingesetzt werden. Man spricht dann von einem hydraulischen Variator.

Insbesondere bei Hybridfahrzeugen muss in extremen Fahrsituationen die gesamte verbrennungsmotorische Leistung in elektrische Leistung und anschleißend wieder in mechanische Leistung umgewandelt werden. Hierzu ist in der Regel eine große Dimensionierung der elektrischen Maschinen erforderlich, was mit hohen Kosten und ungünstigen Getriebewirkungsgraden in vielen Betriebszuständen verbunden ist.

Diesem Problem wird im Stand der Technik mit dem Prinzip der sogenannten Leistungsverzweigung begegnet. Dabei wird die vom Verbrennungsmotor abgegebene Leistung durch ein Differential, das häufig als Planetengetriebe ausgeführt ist, beispielsweise aber auch als eine nicht am Gehäuse abgestützte elektrische Maschine realisiert sein kann, aufgeteilt. Nur ein Teil der Verbrennungsmotorleistung wird durch einen Zweig mit den zwei elektrischen Maschinen unter Wandlung von Drehmoment und Drehzahl geleitet. Die restliche Leistung wird über ein oder mehrere mechanische Leistungszweige mit konstanter Übersetzung zum Abtrieb geführt. Abtriebseitig werden die Leistungen der Zweige an einem sogenannten Knoten, der beispielsweise als Welle-Nabe-Verbindung oder Zahnradstufe ausgeführt sein kann, zusammengeführt. Als ein Grundtyp einer solchen Leistungsverzweigung ist die sogenannte einfache Leistungsverzweigung mit eingangsseitigem Differential, kurz ELVeD, bekannt. ELVeD-Getriebe haben den Nachteil, dass eine Auslegung des Variators so, dass das Fahrzeug im gesamten Übersetzungsbereich in der Nähe eines optimalen Arbeitspunktes betrieben werden kann, kaum möglich ist.

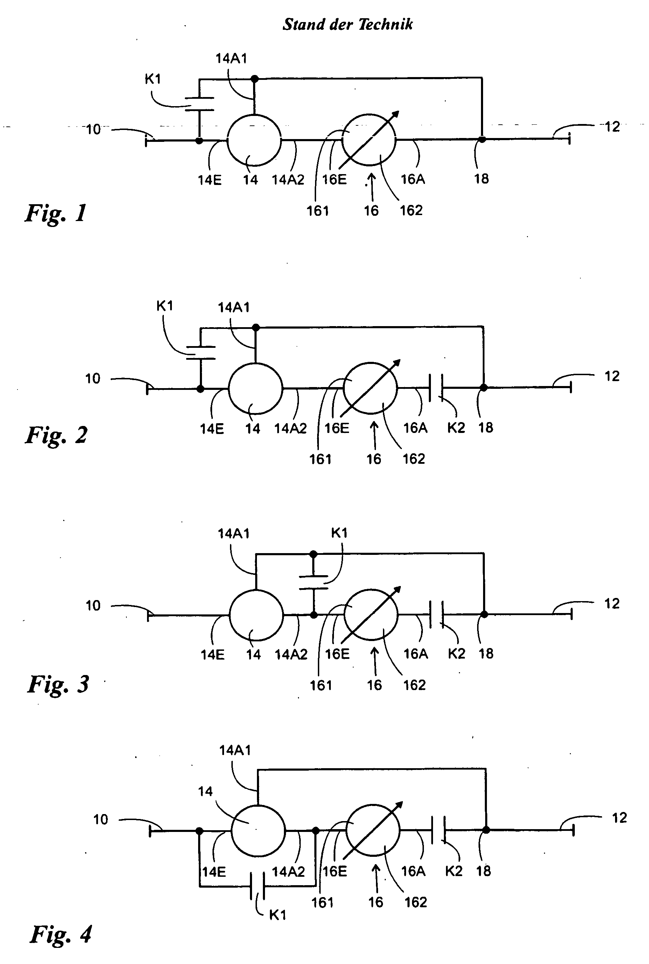

Es ist deshalb bekannt, wenigstens Arbeitsbereiche hoher Dauerzugmomente durch einen zusätzlichen, rein mechanischen Gang abzudecken, der bei hohen Fahrzeuggeschwindigkeiten zur rein mechanischen Übertragung des Momentes der Verbrennungskraftmaschine auf den Abtrieb dient. Dieser löst das Problem jedoch nur punktuell. Er wird typischerweise realisiert durch eine Kopplung zweier Differentialwellen, was die Leistungsverzweigung unterbindet und das Planetengetriebe des Differentials verlustarm als Block umlaufen lässt. In der oben genannten DE 100 04 0812 A1 ist die hierzu dienende "erste" Kupplungsvorrichtung als komplexe 4-Zustandskupplung ausgebildet, wobei in der genannten Druckschrift als eigentlicher Zweck des mechanischen Gangs lediglich die Momentenkompensation bei Ausfall beider Elektromaschinen genannt ist. Fig. 1 zeigt ein vereinfachtes Wolf-Diagramm des bekannten Getriebes, wobei für die vorliegende Erfindung nicht relevante Kupplungselemente der Übersichtlichkeit halber nicht eingezeichnet sind.

Grundsätzlich denkbar ist eine Realisierung eines rein mechanischen Gangs mit langer Übersetzung, sodass bei hohen Fahrgeschwindigkeiten das gesamte Antriebsmoment von der Verbrennungskraftmaschine, die dann bei hohen Drehzahlen in ihrem optimalen Arbeitsbereich betrieben wird, geliefert wird. Dies wird jedoch erschwert durch die begrenzte Maximaldrehzahl der ausgangsseitigen Elektromaschine des Variators. Um diese auch bei hohen Fahrgeschwindigkeiten nicht zu überschreiten, müsste sie mit einer verhältnismäßig kleinen Elektromaschinenübersetzung an den Abtrieb angekoppelt sein, wodurch jedoch in langsameren Fahrsituationen mit hohem Zugkraftbedarf, in denen die ausgangsseitigen Elektromaschine selbst ein positives Moment zum Abtrieb beiträgt, ihr Drehmoment nur unzureichend verstärkt würde.

Aus der gattungsgemäßen US 2 588 750 A ist ein Getriebe für ein Hybridfahrzeug mit einem Differential und einem Variator bekannt, bei dem die Differential-Eingangswelle mit einer mit einem Verbrennungsmotor koppelbaren Getriebeeingangswelle und die erste Differential-Ausgangswelle über einen Knoten mit einer mit dem Abtrieb des Hybridfahrzeugs koppelbaren Getriebe-Ausgangswelle gekoppelt ist. Zwei der Differentialwellen sind mittels einer Kupplung miteinander koppelbar. Die Variator-Eingangswelle ist mit der zweiten Differential-Ausgangswelle gekoppelt und die Variator-Ausgangswelle ist über den Knoten mit der ersten Differential-Ausgangswelle sowie mit der Getriebe-Ausgangswelle gekoppelt. Zwischen der Variator-Ausgangswelle und dem Knoten ist eine weitere Kupplung angeordnet und zwischen der ersten Differentialausgangswelle und dem Knoten ist eine weitere steuerbare Kupplung angeordnet. Somit kann die ausgangsseitige E-Maschine des Variators vom Abtrieb abgekoppelt werden, wenn der rein mechanische Gang eingelegt ist, bei dem das Fahrzeug rein verbrennungsmotorisch angetrieben wird.

### Aufgabenstellung

Es ist die Aufgabe der vorliegenden Erfindung eine gattungsgemäße Getriebestruktur weiterzuentwickeln und zu verbessern.

### Darlegung der Erfindung

Diese Aufgabe wird in Verbindung mit den Merkmalen des Anspruchs 1 gelöst.

Die ausgangsseitige Maschine, insbesondere Elektromaschine des Variators kann vom Abtrieb abgekoppelt werden, wenn der rein mechanische, lange Gang, bei dem das Fahrzeug rein verbrennungsmotorisch angetrieben wird, eingelegt ist. Durch die Abkopplung kann die Übersetzung, mit der die ausgangsseitige Maschine an den Abtrieb angekoppelt ist, so hoch gewählt werden, dass die Maschine in mittleren und langsamen Fahrsituationen, selbst ein hohes Moment zum Abtrieb beiträgt. Insbesondere wird vermieden, dass sie bei hohen Fahrgeschwindigkeiten nutzlos vom Abtrieb mitgeschleppt wird, wobei bei einer hohen Übersetzung ihre Maximaldrehzahl leicht überschritten werden könnte. Ein weiterer Vorteil liegt in der Vermeidung von Schleppverlusten der Ausgangsmaschine des Variators. Diese sind gerade bei den im Automobilbereich besonders verbreiteten permanentmagneterregten Synchronmaschinen besonders hoch.

Die durch die Abkoppelbarkeit gewonnene Freiheit bei der Übersetzung, mit der die ausgangsseitige Maschine des Variators an den Abtrieb angekoppelt ist, kann, wie bei einer bevorzugten Ausführungsform vorgesehen, genutzt werden, indem die Variator-Ausgangswelle über eine Übersetzungsstufe mit einem Eingangselement der zweiten Kupplungsvorrichtung verbunden ist. Eine solche zusätzliche Übersetzungsstufe kann beispielsweise als ein zusätzliches Planetengetriebe, z.B. eines, bei dem eine seiner Wellen mittels einer steuerbaren Bremse gegenüber einem Getriebegehäuse bremsbar oder fest an das Getriebegehäuse angebunden ist, ausgebildet sein.

Bei einer erfindungsgemäßen Getriebestruktur ist vorgesehen, dass zwischen der ersten Differentialausgangswelle und dem ersten Knoten eine dritte steuerbare Kupplungsvorrichtung angeordnet ist. Eine derartige, zusätzliche Kupplungsvorrichtung erlaubt die gleichzeitige Abkopplung von Differential und Verbrennungskraftmaschine vom Antrieb. Hiedurch werden im rein elektrischen Betrieb die Schleppverluste deutlich reduziert.

Zudem ermöglicht eine derartige dritte Kupplungsvorrichtung einen besonders vorteilhaften Start des Verbrennungsmotors aus dem rein elektrischen Betrieb. Im rein elektrischen Betrieb wird die ausgangsseitige Elektromaschine des Variators bei geschlossener zweiter Kupplungsvorrichtung motorisch betrieben. Die dritte Kupplungsvorrichtung ist geöffnet. Verbrennungsmotor und eingangsseitige elektrische Maschine des Variators stehen still. Der Zustand der ersten Kupplungsvorrichtung, die das Differential verblockt, ist in dieser Fahrsituation irrelevant. Zum Start der Verbrennungsmaschine aus diesem rein elektrischen Betrieb muss jedoch die erste Kupplungsvorrichtung zur Verblockung des Differentials geschlossen werden. Anschließend wird der Verbrennungsmotor mit der eingangsseitigen Elektromaschine, die motorisch betrieben wird, auf Zünddrehzahl beschleunigt und gestartet. Dabei ist ein Verbrennungsmotorstart ohne Rückwirkung auf das Abtriebsmoment (Summenradmoment) möglich, da aufgrund der geöffneten dritten Kupplungsvorrichtung keine mechanische Verbindung zwischen Verbrennungsmotor, Differential und eingangsseitiger Elektromaschine einerseits und dem Abtrieb andererseits besteht. Damit wird der Nachteil anderer leistungsverzweigter Getriebestrukturen vermieden, bei denen über die erste Differentialausgangswelle das Drehmoment der eingangsseitigen Elektromaschine zum Start des Verbrennungsmotors als negatives Drehmoment an den Getriebeausgang übertragen wird, was durch die ausgangsseitige Elektromaschine kompensiert werden müsste und eine gute Kenntnis der vorliegenden Drehmomente erforderte. Dies würde einen Zusatzaufwand zur genauen Ermittlung des Verbrennungsmotor-Istmoment erforderlich machen. Zudem müsste die ausgangsseitige Elektromaschine beim Start des Verbrennungsmotors ein so hohes Kompensationsmoment aufbringen, dass dafür Ihre maximalen Drehmomente und Leistungen besonders hoch dimensioniert werden müssten, was zu Bauraum-, Gewichts- und Kostennachteilen führen würde. Nach dem Start des Verbrennungsmotors bei geöffneter, erfindungsgemäßer dritter Kupplungsvorrichtung wird zunächst die erste Kupplungsvorrichtung geöffnet, d.h. das Differential freigegeben. Im Anschluss werden die Drehzahlen synchronisiert und die dritte Kupplungsvorrichtung geschlossen. Dies kann aufgrund der synchronisierten Drehzahlen "digital", also ohne besonderes Steuerverfahren erfolgen. Hieran schließt sich ein achsmomentenneutrales Überblenden der Drehmomente der einzelnen Kupplungen an.

Alternativ kann die dritte Kupplungsvorrichtung auch zwischen der zweiten Getriebeausgangswelle und der Variatoreingangswelle angeordnet sein. Hierdurch wird auch eine Abkoppelbarkeit der eingangsseitigen Elektromaschine des Variators ermöglicht; allerdings birgt diese Variante in Bezug auf den Start der Verbrennungsmaschine aus dem rein elektrischen Fahrbetrieb die oben beschriebenen Nachteile im Hinblick auf das von der ausgangsseitigen Elektromaschine aufzubringende Kompensationsmoment.

Als weitere Alternative kann vorgesehen sein, dass die dritte Kupplungsvorrichtung zwischen der Getriebeeingangswelle und der Differentialeingangswelle angeordnet ist. Dies entspricht einer direkten Abkoppelbarkeit der Verbrennungsmaschine.

Erfindungsgemäß ist vorgesehen, dass die nicht mit der ersten Kupplungsvorrichtung verbundene Differentialwelle mittels einer vierten Kupplungsvorrichtung mit einer der anderen Differentialwellen koppelbar ist. Dies entspricht der Realisierung eines zweiten rein mechanischen Ganges. Dieser zweite rein mechanische Gang ist vorzugsweise für einen anderen Fahrgeschwindigkeitsbereich ausgelegt als der erste rein mechanische Gang. Letzterer ist, wie oben beschrieben, vorzugsweise mit einer langen Übersetzung versehen und für hohe Fahrgeschwindigkeiten gedacht. Der zweite mechanische Gang hingegen kann die Verbrennungsmaschine vorzugsweise mit einer sehr kurzen Übersetzung-an den Abtrieb koppeln, sodass mit ihm Fahrsituationen niedriger Fahrgeschwindigkeit und hoher Dauerzugmomente, zum Beispiel Bergfahrt mit Anhänger, abgedeckt werden können. Zur Realisierung der gewünschten Übersetzung kann der vierten Kupplungsvorrichtung eine entsprechende Übersetzungsstufe vor- oder nachgeschaltet sein.

Günstigerweise ist wenigstens eine der Kupplungsvorrichtungen als eine formschlüssige Kupplung ausgebildet. Beispielsweise kann es sich hier um eine vorzugsweise synchronisierte Klauenkupplung handeln. Formschlüssige Kupplungen unterliegen im Gegensatz zu üblichen reibschlüssigen Kupplungen einem geringeren Verschleiß und benötigen weniger Bauraum.

Weitere Merkmale und Vorteile der Erfindung ergeben sich aus der nachfolgenden, speziellen Beschreibung sowie den Zeichnungen.

### Kurzbeschreibung der Zeichnungen

Es zeigen:
- Figur 1:: Wolf-Diagramm einer Getriebestruktur nach dem Stand der Technik,
- Figur 2:: Wolf-Diagramm einer nicht erfindungsgemäßen Getriebestruktur nach einer ersten Ausführungsform,
- Figur 3:: Wolf-Diagramm einer nicht erfindungsgemäßen Getriebestruktur nach einer zweiten Ausführungsform,
- Figur 4:: Wolf-Diagramm nach einer nicht erfindungsgemäßen Getriebestruktur nach einer dritten, bevorzugten Ausführungsform,
- Figur 5:: Wolf-Diagramm einer nicht erfindungsgemäßen, bevorzugten Weiterbildung der Getriebestruktur von Figur 4,
- Figur 6:: Wolf-Diagramm einer alternativen Weiterbildung der Getriebestruktur von Figur 4,
- Figur 7:: Wolf-Diagramm einer weiteren alternativen Weiterbildung der Getriebestruktur von Figur 4,
- Figur 8:: Wolf-Diagramm einer bevorzugten erfindungsgemäßen Weiterbildung der Getriebestruktur von Figur 5,
- Figur 9:: Wolf-Diagramm einer alternativen erfindungsgemäßen Weiterbildung der Getriebestruktur von Figur 5,
- Figur 10:: schematische Darstellung der Getriebestruktur von Figur 8,
- Figur 11:: schematische Darstellung einer weiteren Ausführungsform der Getriebestruktur von Figur 8.

### Ausführliche Beschreibung bevorzugter Ausführungsformen

Im Rahmen der vorliegenden Erfindung bedeutet der Begriff "gekoppelt", dass allgemein ein Wirkverbindungspfad zwischen zwei als "gekoppelt" beschriebenen Elementen vorgesehen ist. Dieser Wirkverbindungspfad kann sowohl drehfeste Verbindungen als auch Verbindungen, die Relativdrehungen zulassen, z.B. Übersetzungsstufen, umfassen. Weiter ist es nicht erforderlich, dass der Wirkverbindungspfad dauerhaft besteht. Insbesondere können zwischen zwei als "gekoppelt" beschriebenen Elementen Kupplungsvorrichtungen vorgesehen sein, die den Wirkverbindungspfad wenigstens temporär unterbrechen können.

Der Begriff "koppelbar" bedeutet im Rahmen der vorliegenden Beschreibung, das die Wirkverbindung zwischen zwei als "koppelbar" beschriebenen Elementen zwingend eine Nahtstelle aufweist, die durch eine Kupplungsvorrichtung temporär oder durch bauliche Maßnahmen dauerhaft geschlossen werden kann.

Figur 1 zeigt ein Wolf-Diagramm einer Getriebestruktur gemäß dem Stand der Technik. Die Getriebeeingangswelle 10 ist, insbesondere im Rahmen des Einbaus der Getriebestruktur in ein Kraftfahrzeug, mit dessen Verbrennungsmotor, insbesondere dessen Kurbelwelle, koppelbar. Analoges gilt für die Getriebeausgangswelle 12, die mit dem Abtrieb des Kraftfahrzeugs, insbesondere mit dem Achsdifferential einer angetriebenen Achse des Kraftfahrzeugs koppelbar ist. Die Getriebestruktur umfasst ein Differential 14, das insbesondere als Planetengetriebe ausgebildet sein kann und wenigstens drei Wellen umfasst, nämlich eine Differentialeingangswelle 14E, eine erste Differentialausgangswelle 14A1 und eine zweite Differentialausgangswelle 14A2. An das Planetengetriebe 14 schließt sich ein Variator 16 an, der bei der bevorzugten Ausführungsform eine erste elektrische Maschine 161 und eine zweite elektrische Maschine 162 umfasst, zwischen denen eine steuerbare Leistungselektronik vorgesehen ist. Typischerweise ist außerdem ein elektrischer Energiespeicher mit dem Variator verbunden. Der Variator 16 ist über seine Variatoreingangswelle 16E mit der zweiten Differentialausgangswelle 14A2 gekoppelt. Die Variatorausgangswelle 16A ist über einen Knoten 18 mit der Getriebeausgangswelle 12 gekoppelt. Der Knoten 18 kann auf unterschiedliche Weise, z.B. als Welle-Nabe-Verbindung, Zahnradstufe, Übersetzungsgetriebe, Vorgelegewelle etc. ausgebildet sein. Ebenfalls mit dem Knoten 18 gekoppelt ist die erste Differentialausgangswelle 14A1 des Differentials 14. Um einen rein mechanischen Gang zu realisieren, können die Differentialeingangswelle 14E und die erste Differentialausgangswelle 14A1 über eine erste Kupplungsvorrichtung K1 miteinander verbunden werden, sodass das Differential 14 verblockt ist und verlustarm ohne innere Relativbewegungen als Block umläuft.

Die im Zusammenhang mit Figur 1 eingeführten Bezugszeichen bezeichnen im weiteren Verlauf korrespondierende Elemente in den übrigen Figuren.

Figur 2 zeigt eine Ausführungsform einer Getriebestruktur. Diese unterscheidet sich von der bekannten Getriebestruktur gemäß Figur 1 durch die Einführung einer zweiten Kupplungsvorrichtung K2 zwischen der Variatorausgangswelle 16A und dem Knoten 18. Hierdurch wird eine Abkoppelbarkeit der ausgangsseitigen elektrischen Maschine 162 im Fall des Fahrzeugbetriebs im rein mechanischen Gang, der durch ein Schließen der ersten Kupplungsvorrichtung K1 realisiert wird, ermöglicht. Hierdurch werden die Schleppverluste der zweiten elektrischen Maschine 162 vermieden. Zudem ist es möglich, über eine in Figur 2 nicht dargestellte, zusätzliche Übersetzungsstufe die ausgangsseitige elektrische Maschine 162 mit hoher Übersetzung an die Getriebeausgangswelle 12 anzukoppeln, was ohne die erfindungsgemäße zweite Kupplungsvorrichtung K2 aufgrund der beschränkten Maximaldrehzahl der elektrischen Maschine 162 bei hohen Fahrzeuggeschwindigkeiten nicht möglich wäre.

Figur 3 und 4 zeigen weitere Varianten, bei denen die erste Kupplungsvorrichtung K1 an anderer Stelle, d.h. zwischen anderen Wellen des Differentials 14 angeordnet ist. In Figur 3 ist die erste Kupplungsvorrichtung K1 zwischen der ersten Differentialausgangswelle 14A1 und der zweiten Differentialausgangswelle 14A2 angeordnet. In Figur 4 ist die erste Kupplungsvorrichtung K1 zwischen der Differentialeingangswelle 14E und der zweiten Differentialausgangswelle 14A2 angeordnet. Diese Anordnung ist die bevorzugte. Alle nachfolgend beschriebenen Weiterbildungen der Erfindung bauen auf dieser bevorzugten Anordnung auf, ihre jeweiligen kennzeichnenden Merkmale sind jedoch für den Fachmann ohne Weiteres auch mit den Grundstrukturen der Figuren 2 und 3 kombinierbar. Auch diese Kombinationen sollen hier als offenbart gelten und vom Schutzbereich der Patentansprüche umfasst sein.

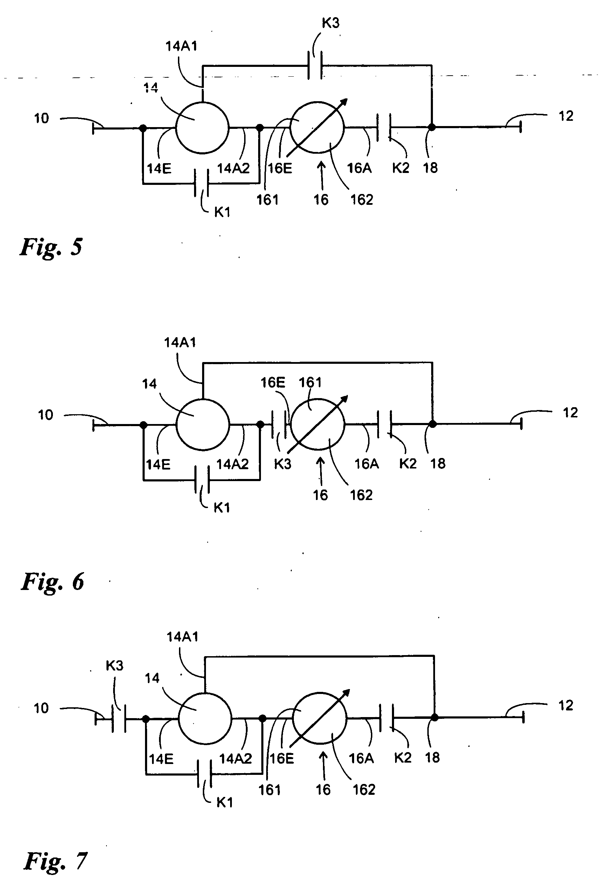

Figur 5 zeigt eine bevorzugte Weiterbildung der Getriebestruktur von Figur 4. Diese zeichnet sich durch eine weitere dritte Kupplungsvorrichtung K3 aus, die den Knoten 18 mit der freien, d.h. der nicht von der ersten Kupplungsvorrichtung mit einer anderen Differentialwelle gekoppelten Differentialwelle, koppelt.

Bei der Ausführungsform von Figur 5 ist dies die erste Differentialausgangswelle 14 A1. Mittels der dritten Kupplungsvorrichtung K3 können im Fall des rein elektrischen Betriebs des Fahrzeugs die Verbrennungsmaschine, das Differential 14 und die erste elektrische Maschine 161 vollständig vom Abtrieb abgekoppelt werden. Dies ermöglichst insbesondere einen Start bzw. Wiederstart der Verbrennungsmaschine unter optimierten Bedingungen unabhängig von der Fahrzeuggeschwindigkeit.

Die Figuren 6 und 7 zeigen alternative Anordnungen der dritten Kupplungsvorrichtung K3, die jedoch nicht bevorzugt sind, da mit Ihnen jeweils nur eines der vorgenannten drei Elemente vom Abtrieb abkoppelbar ist, nämlich die erste elektrische Maschine 161 (Figur 6) bzw. die Verbrennungsmaschine (Figur 7). Die nachfolgend beschriebenen Weiterbildungen der Erfindung gehen daher aus von der Ausführungsform gemäß Figur 5, wobei ihre jeweils kennzeichnenden Merkmale für den Fachmann jedoch ohne Weiteres auch mit den Strukturen der Figuren 6 und 7 kombinierbar sind. Diese sollen hier ebenfalls als offenbart gelten und vom Schutzbereich der Patentansprüche umfasst sein.

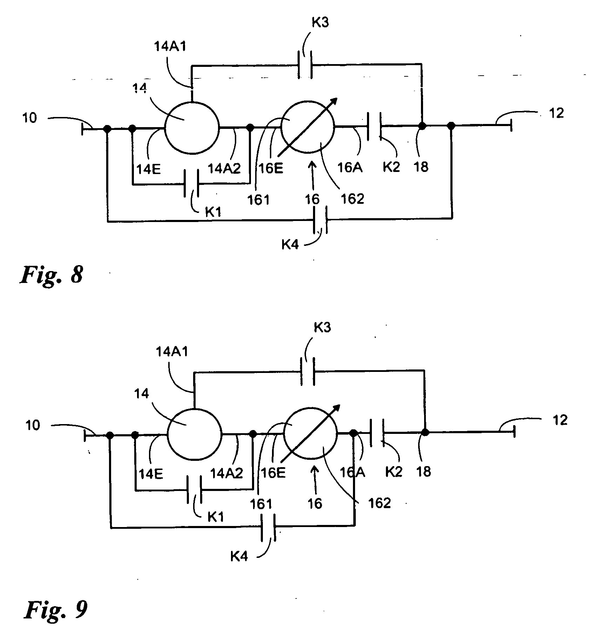

Die Ausführungsformen der Figuren 8 und 9 erweitern die bisher beschriebenen Getriebestrukturen um einen weiteren rein mechanischen Gang, der durch die vierte Kupplungsvorrichtung K4 realisiert wird. Diese koppelt zwei andere Differentialwellen als die erste Kupplungsvorrichtung K1. Alternativ könnten auch dieselben Wellen wie mittels der ersten Kupplungsvorrichtung K1 gekoppelt werden, jedoch mit einer anderen zwischengeschalteten Übersetzung. Grundsätzlich hat die Kopplung zweier Differentialwellen unabhängig davon, welche speziellen Wellen gekoppelt werden, die gleiche Wirkung, nämlich die Verblockung des Differentials. Dadurch, dass durch die Kupplungsvorrichtungen K1 und K4 jedoch Differentialwellen auf unterschiedlichen Wirkverbindungspfaden gekoppelt werden können, könne diese Pfade unterschiedlich gestaltet sein, insbesondere unterschiedliche Übersetzungen zum Abtrieb realisieren. Insbesondere ist es möglich, beispielsweise über die erste Kupplungsvorrichtung K1 einen "langen" Gang zu realisieren, der bei hohen Fahrzeuggeschwindigkeiten eine rein mechanische Kraftübertragung von der Verbrennungsmaschine zum Abtrieb ermöglicht. Demgegenüber kann der zweite rein mechanische Gang, realisiert durch die vierte Kupplungsvorrichtung K4, eine kurze Übersetzung haben und insbesondere eingesetzt werden, wenn hohe Dauerzugleistungen bei niedrigen Fahrzeuggeschwindigkeiten, die die elektrischen Maschinen überlasten würden, gefordert sind. Entsprechende Übersetzungsstufen, die z.B. als Stirnradstufen oder Planetengetriebe ausgebildet sein können, sind in den Figuren 2-9 nicht dargestellt, können jedoch leicht an beliebiger Stelle eingefügt werden.

Die Unterschiede zwischen den Strukturen der Figuren 8 und 9 bestehen lediglich im Ort der Ankopplung an den Abtrieb. Bevorzugt ist die Ankopplung im Bereich des Knotens 18 (Figur 8). Grundsätzlich möglich wäre jedoch auch die Ankopplung vor der zweiten Kupplungsvorrichtung K2, d.h. zwischen dieser und der Variatorausgangswelle 16 A. Bei dieser Variante wäre allerdings in dem zweiten mechanischen Gang, keine Abkoppelbarkeit der ausgangsseitigen elektrischen Maschine 162 gegeben. Ist der zweite mechanische Gang jedoch, wie oben beschrieben, für niedrige Fahrzeuggeschwindigkeiten ausgelegt, wäre dies kein Hindernis. Im Gegenteil könnte bei niedrigen Fahrzeuggeschwindigkeiten je nach Momentenanforderung die Überblendung zwischen rein mechanischem und geboostetem, d.h. mit elektrischem Antrieb kombiniertem verbrennungsmotorischem Antrieb, erleichtert werden.

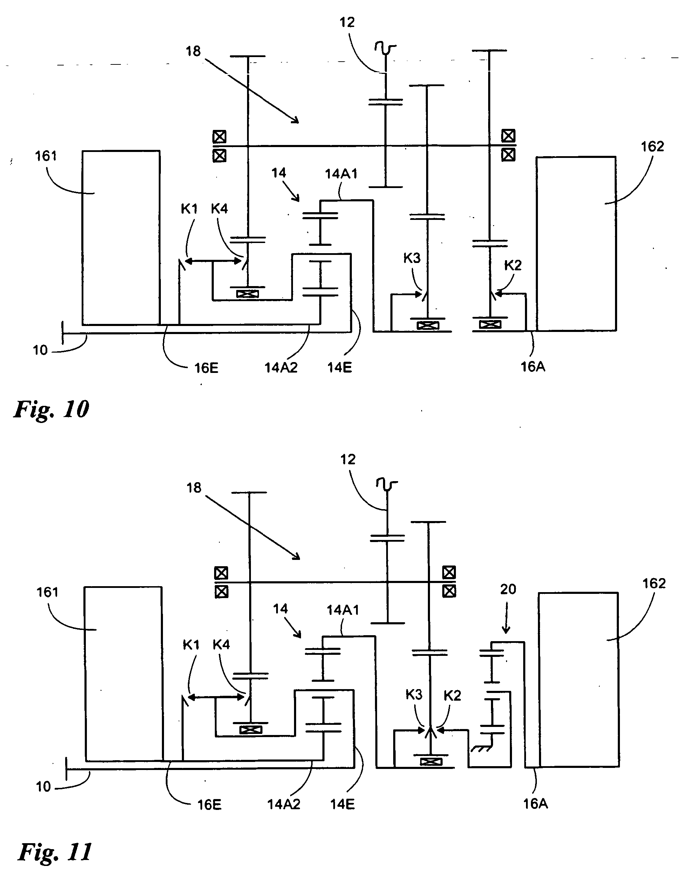

Figur 10 zeigt eine schematische Darstellung der Getriebestruktur von Figur 8. Der Knoten 18 ist hier als eine Triebwelle mit drei Eingangs- und einem Ausgangsritzel realisiert. Im übrigen sind die einzelnen Elemente durch Verwendung der bereits eingeführten Bezugszeichen ohne weiteres identifizierbar.

Die Struktur von Figur 11 unterscheidet sich von derjenigen von Figur 10 dadurch, dass zwischen der ausgangsseitigen elektrischen Maschine 162 und der zweiten Kupplungsvorrichtung K2 ein zusätzliches Planetengetriebe 20 als Übersetzungsstufe für die elektrische Maschine 162 vorgesehen ist. Die Sonne des Planetengetriebes 20 ist über das Getriebegehäuse dauerhaft festgesetzt.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten anhand gegeben. Auch ist es grundsätzlich möglich, an jeder beliebigen Stelle insbesondere jeweils einer Kupplungsvorrichtung zugeordnet, Übersetzungsstufen zur Anpassung der Relativdrehzahlen an den jeweiligen Einsatzbereich anzuordnen. Auch die spezielle Ausgestaltung der Kupplungsvorrichtungen muss vom Fachmann im Lichte der speziellen Aufgabenstellung im Hinblick auf Verschleiß, Bauraum, Momentenübertragung etc. gewählt werden. Als besonders vorteilhaft wird die Verwendung von formschlüssigen anstelle von kraftschlüssigen Kupplungen angesehen.

## Patentansprüche

1. Getriebeanordnung für ein Hybridfahrzeug, umfassend
- ein Differential (14), das drei Differentialwellen, nämlich eine Differential-Eingangswelle (14E) und eine erste und eine zweite Differential-Ausgangswelle (14A1, 14A2) aufweist, wobei die Differential-Eingangswelle mit einer mit einem Verbrennungsmotor koppelbaren Getriebeeingangswelle (10) und die erste Differential-Ausgangswelle (14A1) über einen Knoten (18) mit einer mit dem Abtrieb des Hybridfahrzeugs koppelbaren Getriebe-Ausgangswelle (12) gekoppelt ist und wobei zwei der Differentialwellen (14E, 14A1, 14A2) mittels einer ersten steuerbaren Kupplungsvorrichtung (k1) miteinander koppelbar sind,
- einen Variator (16), dessen Variator-Eingangswelle mit der zweiten Differential-Ausgangswelle (14A2) gekoppelt ist und dessen Variator-Ausgangswelle (16A) über den Knoten (18) mit der ersten Differential-Ausgangswelle (14A1) sowie mit der Getriebe-Ausgangswelle (12) gekoppelt ist,
wobei zwischen der Variator-Ausgangswelle (16A) und dem Knoten (18) eine zweite steuerbare Kupplungsvorrichtung (K2) angeordnet ist und wobei zwischen der ersten Differentialausgangswelle (14A1) und dem Knoten (18) eine dritte steuerbare Kupplungsvorrichtung (K3) angeordnet ist,
**dadurch gekennzeichnet,**
**dass** die nicht mit der ersten Kupplungsvorrichtung (K1) verbundene Differentialwelle (14A1) mittels einer vierten Kupplungsvorrichtung (K4) mit einer der anderen Differentialwellen (14E) koppelbar ist und dass der vierten Kupplungsvorrichtung (K4) eine Übersetzungsstufe vor- oder nachgeschaltet ist.

2. Getriebeanordnung nach Anspruch 1, **dadurch gekennzeichnet, dass** die Variator-Ausgangswelle (16A) über eine Übersetzungsstufe mit einem Eingangselement der zweiten Kupplungsvorrichtung (K2) verbunden ist.

3. Getriebeanordnung nach einem der vorangehenden Ansprüche, **dadurch gekennzeichnet, dass** wenigstens eine der Kupplungsvorrichtungen (K1, K2, K3, K4) als eine formschlüssige Kupplung ausgebildet ist.

4. Kraftfahrzeug, umfassend eine Verbrennungskraftmaschine, eine Getriebeanordnung mit einer Getriebeeingangswelle (10) und einer Getriebeausgangswelle (12) und einem Abtrieb, wobei die Verbrennungskraftmaschine mit der Getriebeeingangswelle (10) und der Abtrieb mit der Getriebeausgangswelle (12) gekoppelt ist,
**dadurch gekennzeichnet,**
**dass** die Getriebeanordnung eine Getriebeanordnung nach einem der vorangehenden - Ansprüche ist.

## Claims

1. Transmission arrangement for a hybrid vehicle, comprising
- a differential (14) which has three differential shafts, namely a differential input shaft (14E) and a first and a second differential output shaft (14A1, 14A2), the differential input shaft being coupled to a transmission input shaft (10) which can be coupled to an internal combustion engine, and the first differential output shaft (14A1) being coupled via a junction (18) to a transmission output shaft (12) which can be coupled to the output of the hybrid vehicle, and it being possible for two of the differential shafts (14E, 14A1, 14A2) to be coupled to one another by means of a first controllable clutch device (K1),
- a variator (16), the variator input shaft of which is coupled to the second differential output shaft (14A2), and the variator output shaft (16A) of which is coupled via the junction (18) to the first differential output shaft (14A1) and to the transmission output shaft (12),
a second controllable clutch device (K2) being arranged between the variator output shaft (16A) and the junction (18), and a third controllable clutch device (K3) being arranged between the first differential output shaft (14A1) and the junction (18),
**characterized**
**in that** the differential shaft (14A1) which is not connected to the first clutch device (K1) can be coupled by means of a fourth clutch device (K4) to one of the other differential shafts (14E), and in that a transmission stage is connected upstream or downstream of the fourth clutch device (K4).

2. Transmission arrangement according to Claim 1, **characterized in that** the variator output shaft (16A) is connected via a transmission stage to an input element of the second clutch device (K2).

3. Transmission arrangement according to either of the preceding claims, **characterized in that** at least one of the clutch devices (K1, K2, K3, K4) is configured as a positively locking clutch.

4. Motor vehicle, comprising an internal combustion engine, a transmission arrangement having a transmission input shaft (10), a transmission output shaft (12) and an output, the internal combustion engine being coupled to the transmission input shaft (10) and the output being coupled to the transmission output shaft (12), **characterized in that** the transmission arrangement is a transmission arrangement according to one of the preceding claims.

## Revendications

1. Dispositif de boîte de vitesses pour un véhicule hybride, comprenant :
- un différentiel (14) qui présente trois arbres de différentiel, à savoir un arbre d'entrée de différentiel (14E) et un premier et un deuxième arbre de sortie de différentiel (14A1, 14A2), l'arbre d'entrée de différentiel étant accouplé à un arbre d'entrée de boîte de vitesses (10) pouvant être accouplé à un moteur à combustion et le premier arbre de sortie de différentiel (14A1) étant accouplé par le biais d'un noeud (18) à un arbre de sortie de boîte de vitesses (12) pouvant être accouplé à la prise de force de véhicule hybride et deux des arbres différentiels (14E, 14A1, 14A2) pouvant être accouplés l'un à l'autre au moyen d'un premier dispositif d'embrayage commandable (k1),
- un variateur (16), dont l'arbre d'entrée de variateur est accouplé au deuxième arbre de sortie de différentiel (14A2) et dont l'arbre de sortie de variateur (16A) est accouplé par le biais du noeud (18) au premier arbre de sortie de différentiel (14A1) ainsi qu'à l'arbre de sortie de boîte de vitesses (12),
un deuxième dispositif d'embrayage commandable (K2) étant disposé entre l'arbre de sortie de variateur (16A) et le noeud (18) et un troisième dispositif d'embrayage commandable (K3) étant disposé entre le premier arbre de sortie de différentiel (14A1) et le noeud (18),
**caractérisé en ce que**
l'arbre de différentiel (14A1) non connecté au premier dispositif d'embrayage (K1) peut être accouplé au moyen d'un quatrième dispositif d'embrayage (K4) à l'un des autres arbres de différentiel (14E) et **en ce que** le quatrième dispositif d'embrayage (K4) est précédé ou suivi d'un étage de multiplication.

2. Dispositif de boîte de vitesses selon la revendication 1, **caractérisé en ce que** l'arbre de sortie de variateur (16A) est connecté par le biais d'un étage de multiplication à un élément d'entrée du deuxième dispositif d'embrayage (K2).

3. Dispositif de boîte de vitesses selon l'une quelconque des revendications précédentes, **caractérisé en ce qu'**au moins l'un des dispositifs d'embrayage (K1, K2, K3, K4) est réalisé sous forme d'embrayage à engagement par correspondance de formes.

4. Véhicule automobile comprenant un moteur à combustion interne, un dispositif de boîte de vitesses avec un arbre d'entrée de boîte de vitesses (10) et un arbre de sortie de boîte de vitesses (12) et une prise de force, le moteur à combustion interne étant accouplé à l'arbre d'entrée de boîte de vitesses (10) et la prise de force étant accouplée à l'arbre de sortie de boîte de vitesses (12),
**caractérisé en ce que**
le dispositif de boîte de vitesses est un dispositif de boîte de vitesses selon l'une quelconque des revendications précédentes.
